Europäisches Patentamt

(19) European Patent Office

Office européen des brevets

(11) Numéro de publication: **0 181 825**
**B1**

(12) **FASCICULE DE BREVET EUROPEEN**

(45) Date de publication du fascicule du brevet:
28.12.88

(21) Numéro de dépôt: 85420177.9

(22) Date de dépôt: 09.10.85

(51) Int. Cl.⁴: **B 32 B 18/00**, F 27 D 1/00,
F 16 L 59/02, B 32 B 5/08

┌─────────────┐
│ E R R A T U M │
└─────────────┘

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
|---|---|---|---|---|
| caractérisé en ce successives (1-4),<br>on interpose | 5 | 8 | 4 | caractérisé en ce que entre deux nappes élémentaires successives (1-4), on interpose |

| Tag der Entscheidung<br>über die Berichtigung<br>Date of decision on<br>rectification:<br>Date de décision portant<br>sur modification: | )<br>)<br>) 21.02.89<br>)<br>) | Ausgabe- und Ver-<br>öffentlichungstag:<br>Issue and publication<br>date:<br>Date d'edition et de<br>publication: | )<br>)<br>) 12.04.89<br>)<br>) | Patbl.Nr)<br><br>EPB no:) 89/15<br><br>Bull. no:) |

**Europäisches Patentamt**

**European Patent Office**

**Office européen des brevets**

(19)

(11) Numéro de publication: **0 181 825
B1**

---

## (12) FASCICULE DE BREVET EUROPEEN

(45) Date de publication du fascicule du brevet:
**28.12.88**

(21) Numéro de dépôt: **85420177.9**

(22) Date de dépôt: **09.10.85**

(51) Int. Cl.⁴: **B 32 B 18/00,** F 27 D 1/00,
F 16 L 59/02, B 32 B 5/08

(54) **Pièces isolante de formes variées, formée par un empilement de nappes en fibres réstistant à haute température et procédé de fabrication.**

---

(30) Priorité: **25.10.84 FR 8416517**

(43) Date de publication de la demande:
**21.05.86 Bulletin 86/21**

(45) Mention de la délivrance du brevet:
**28.12.88 Bulletin 88/52**

(84) Etats contractants désignés:
**AT BE CH DE FR GB IT LI LU NL SE**

(56) Documents cités:
**FR-A- 1 213 048
FR-A- 1 602 362
FR-A- 2 047 708
GB-A- 964 277
GB-A- 2 025 320
GB-A- 2 032 845**

**THE AMERICAN CERAMIC SOCIETY BULLETIN, vol. 60, no. 7, juillet 1981, pages 695-699, Columbus, Ohio, US; C.E. CHAILLE et al.: "Ceramic fiber board linings for furnaces operating at 1200-1480 degr. C"**

(73) Titulaire: **PRODUITS CELLULOSIQUES ISOLANTS-PROCELIS Société anonyme:, 15 avenue Henri Barbusse, F-38300 Bourgoin Jallieu (FR)**

(72) Inventeur: **Grandin de l'Eprevier, Alain, Immeuble Charcot Champeret, F-38300 Bourgoin Jallieu (FR)**
Inventeur: **Garnier, Albert, La Rollandière Saint Just Chaleyssin, F-38540 Heyrieux (FR)**

(74) Mandataire: **Laurent, Michel et al, Cabinet LAURENT et GUERRE B.P. 32, F-69131 Ecully Cédex (FR)**

---

## Description

L'invention concerne un nouveau type de pièces isolantes, notamment pour l'isolation électrique, thermique et/ou phonique, de formes variées, constituées par un empilement de nappes superposées en fibres résistant à haute température; elle se rapporte aussi à un procédé de fabrication.

On connait déjà plusieurs procédés pour la fabrication de corps isolants de formes variées.

Dans le brevet français FR-A-1 213 048, on a décrit un procédé pour la réalisation de tels produits qui consiste à mettre en place, sur une forme appropriée, une couche humide de fibres cellulosiques, puis à serrer cette couche au moyen d'une bande textile élastique, de manière à exsuder l'eau en excès, et enfin à sécher cette pièce. Cette technique qui donne d'excellents résultats dans les applications électriques, présente néanmoins certains inconvénients. En effet, les pièces étant constituées par des fibres cellulosiques, ne peuvent pas travailler à des températures supérieures à 90–100 °C. En outre, lorsqu'il s'agit de réaliser des pièces de formes complexes, la forme doit tenir compte du retrait potentiel des fibres. Enfin, si l'on doit réaliser un produit épais, on est obligé de procédé par étapes successives, avec un séchage intermédiaire entre chaque étape, ce qui est long, coûteux et conduit nécessairement à une certaine hétérogénéité dans le produit fini.

On a déjà proposé plusieurs procédés pour réaliser de pièces susceptibles de travailler à des températures élevées, c'est-à-dire supérieures à 800 °C. On a par exemple suggéré de faire appel à des suspensions aqueuses de fibres réfractaires, c'est-à-dire des fibres résistant à la température, notamment des fibres céramique, et de déposer ces fibres par aspiration à travers une forme perforée. Cette technique présente des avantages certains, tels que par exemple l'homogénéité mécanique des pièces ainsi réalisées sur toute leur épaisseur. Cette technique est aussi parfaitement adaptée à la fabrication de pièces de forme simple, démoulables, produites en grande série. En revanche, cette technique ne permet pas la réalisation économique de pièces unitaires. Elle devient même inutilisable pour des formes compliquées non démoulables. En outre, il existe une limite pratique à l'épaisseur des pièces réalisées de la sorte, limite que l'on situe à cent millimètres, alors que l'épaisseur habituelle actuellement requise pour une isolation thermique efficace à des températures supérieures à 1100 °C, dépasse souvent largement ces limites.

Dans une variante perfectionnée, décrite dans le brevet FR-A-1 602 362 (correspondant connu GB-A-1 296 681), on a proposé de déposer sur la forme poreuse des couches successives de fibres, disposées dans un ordre régulier de résistance à la chaleur. Comme précédemment, on évaue l'eau des différentes couches humides par aspiration à travers la forme. Du fait même de cette aspiration, comme déjà dit, l'épaisseur du produit fini ne peut guère dépasser cent millimètres, ce qui en limite considérablement l'intérêt pratique.

Ces procédés sont mal adaptés à la mise en œuvre de couches liées à forte densité. De la sorte, industriellement, ils ne permettent pas d'obtenir des pièces denses dont la densité soit supérieure à 0,3 et qui soient mécaniquement résistantes. Or l'industrie réclame de plus en plus fortement de telles caractéristiques mécaniques pour les pièces isolantes à haute température. Par ailleurs, ces procédés ne permettent qu'une faible variation de la densité et excluent totalement la préparation de pièces étanches aux fluides. Ces handicaps limitent donc considérablement les domaines d'utilisation de ces pièces, notamment à cause du manque de résistance mécanique, de leur porosité excessive de la corrosion qui peut en résulter et de l'épaisseur limitée de ces pièces.

L'invention pallie ces inconvénients. Elle vise une pièce dense (supérieure à 0,3), mécaniquement résistante pour isolation, notamment électrique, thermique et/ou phonique, de formes variées, susceptible de pouvoir travailler à des températures supérieures à 800 °C, d'épaisseur quelconque, en tout cas nettement supérieure à cent millimètres, et qui soit facile à fabriquer en petite série, tout en restant économique.

Cette pièce isolante dense et résistante, forme variée est constituée par une succession de nappes superposées en fibres résistant à haute température, dans laquelle:

– d'une part, la nappe constituant la face chaude comporte pour partie essentielle des fibres ayant une haute résistance à la température;

– d'autre part, la nappe constituant la face opposée froide comporte pour partie essentielle des fibres ayant une résistance à la température inférieure à celle de la face chaude,

Elle se caractérise:

– en ce que les nappes intermédiaires disposées entre ces deux faces extrêmes:

– d'une part, présentent une densité apparente qui diminue de la face chaude à la face froide,

– d'autre part, comportent des fibres dont les propriétés de résistance à la température sensiblement les mêmes à l'enténeur de chaque nappe diminuent progressivement de la face chaude à la face froide;

En d'autres termes, l'invention consiste à faire varier simultanément de la face chaude à la face froide la densité de chaque nappe, ainsi que la résistance à la température des fibres constituant ces nappes. De la sorte, la conductivité thermique de la pièce finie est minimale pour chaque isotherme.

La face chaude, dénommée aussi «intrados», c'est-à-dire celle qui est destinée à travailler à la plus haute température, présente les fibres les plus résistantes à la température et également la plus forte densité, ce qui lui confère ainsi les meilleures propriétés mécaniques et d'isolation. En revanche, la face froide, dénommée aussi «extrados», c'est-à-dire celle qui est destinée à travailler à la plus basse température, présente la plus faible densité. Comme cette face froide est constituée avec des fibres présentant une résistance moindre à la température, cette nappe coûte moins cher. Dans les pièces isolantes selon l'invention on combine donc d'excellentes propriétés mécaniques et thermiques.

Cela est donc radicalement différent des enseignements traditionnels où l'on recherchait des densités les plus faibles pour obtenir les meilleures propriétés isolantes. Cette contradiction apparente provient du caractère non linéaire de la variation de la conductivité thermique en fonction de la température et de la densité.

Par «fibres résistant à haute température», on désigne des fibres de longueur et de nature variées, susceptibles de résister sans inconvénient notable à des températures d'au moins 800 °C. On utilise avantageusement des fibres minérales, telles que par exemple les fibres céramiques ou les «whiskers». Avantageusement, en pratique:

— les fibres sont liées entre elles par une composition liante;

— la face froide est revêtue par une couche compacte, cellulosique ou métallique pour rendre la pièce étanche;

— entre deux nappes élémentaires successives, on interpose une couche étanche aux gaz; dans une première forme de réalisation, cette couche étanche est une feuille d'aluminium qui sera oxydée lors d'un traitement ultérieur à haute température; dans une seconde forme de réalisation, cette couche est formée de matériaux qui sont thermofusibles mais fondus ultérieurement.

Un procédé pour la fabrication d'une telle pièce isolante de formes variées, se caractérise en ce qu'il consiste:

— tout d'abord, à empiler une succession de nappes élémentaires humides en fibres résistant à haute température, imprégnées d'une composition liante, dans laquelle:

— la nappe destinée à constituer la face chaude comporte les fibres les plus résistantes à la température,

— alors que la nappe destinée à constituer la face froide comporte les fibres les moins résistantes à la température,

— la densité apparente diminue de la face chaude à la face froide;

— puis, de manière connue, à serrer l'ensemble dans une étoffe élastique pour permettre l'exsudation de l'eau et du liant en excès;

— et enfin, à sécher la pièce obtenue.

Avantageusement, en pratique:

— on soumet l'ensemble à un traitement thermique à des conditions aptes à céramiser la composition liante;

— on chauffe progressivement l'ensemble à une température supérieure à la température du retrait des fibres céramiques, de manière à provoquer une stabilisation dimensionnelle de ces fibres;

— au moins une des nappes élémentaires peut comporter également pour partie minoritaire des fibres combustibles; on chauffe l'ensemble à une température supérieure à la température de combustion de ces fibres, de sorte que, par ce traitement thermique, on provoque l'apparition de vides qui ont pour effet de diminuer la densité apparente de ces nappes;

— entre deux nappes élémentaires successives, on interpose une couche d'un matériau susceptible après traitement thermique de donner une couche étanche;

— entre deux nappes humides successives, on serre également, de manière connue, dans une étoffe élastique pour au moins exsuder partiellement l'eau en excès.

Comme composition liante, on utilise des matières d'usage courant pour ce type d'application. On peut citer des liants minéraux, tels que par exemple ceux à base de silicate d'aluminium, de magnésium, de calcium ou de zirconium, de phosphate d'aluminium, ou des solutions gélifiables comportant une proportion appréciable de silice et d'alumine. On peut également utiliser des liants organiques qui présentent l'avantage de pouvoir se détruire complètement lors du traitement thermique.

La manière dont l'invention peut être réalisée et les avantages qui en découlent ressortiront mieux des exemples de réalisation qui suivent donnés à titre indicatif et non limitatif, à l'appui des figures annexées.

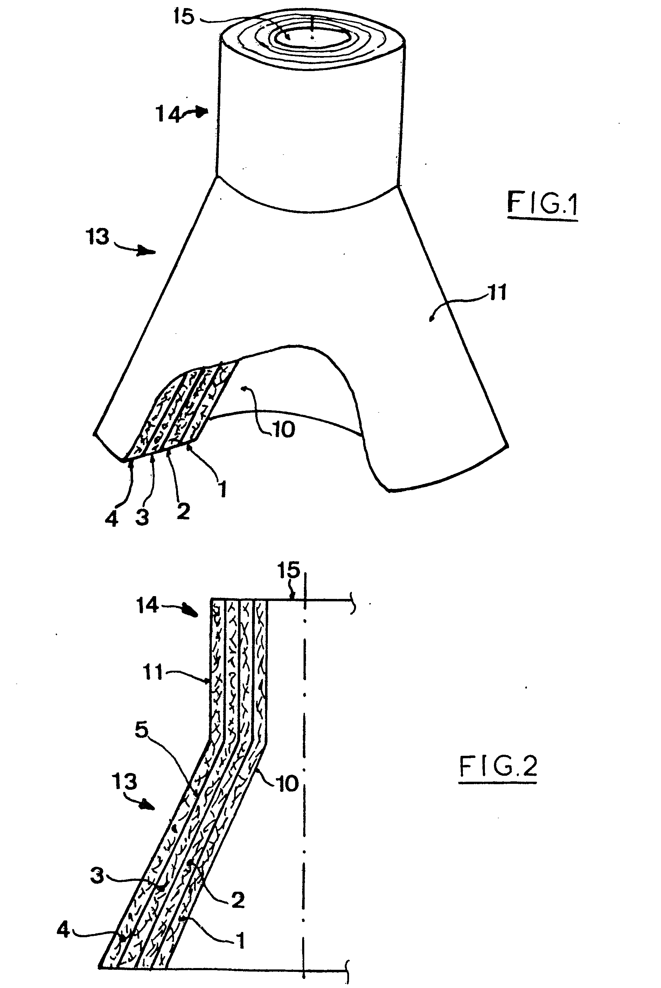

La figure 1 montre une pièce isolante de révolution réalisée selon l'invention en vue perspective sommaire éclatée. Cette pièce est formée par un tronc de cône (13) relié par son sommet à un cylindre (14), creux (15) en son centre.

La figure 2 est une vue en coupe de cette pièce dans le plan longitudinal.

Exemple 1:

Sur une forme rigide, par exemple en aluminium, ayant la forme d'un tronc de cône (13) relié par son sommet à un cylindre (14), on dépose une première nappe (1) en fibres céramiques de 160 kg/m³ ayant une épaisseur de 25 mm commercialisée par «Lafarge Réfractaires» sous la marque «KERLANE K60», imprégnée plein bain par un liant réfractaire de silicate d'aluminium résistant à 1400 °C.

De manière connue, on exsude partiellement en entourant la nappe d'une bande élastique.

Sur cette première couche exsudée (1) destinée à former la paroi chaude (10), on dépose une seconde nappe (2) également imprégnée, ayant sensiblement les mêmes caractéristiques, commercialisée par «Lafarge» sous la dénomination «K60», mais présentant pour une épaisseur de 19 mm une densité de 128 kg/m³.

Après exsudation partielle, sur cette seconde nappe (2), on dépose ensuite une troisième nappe humide (3), également en fibres céramiques commercialisée par «Lafarge» sous la dénomination «K45», ayant une densité de 128 kg/m³ pour une épaisseur de 12,7 mm. Cette nappe (3) est imprégnée d'une composition de silicate d'aluminium résistant à 1200 °C.

On recouvre enfin cette nappe (3) partiellement exsudée comme précédemment par une dernière nappe (4) de fibres céramiques commercialisées par «Lafarge Réfractaires» sous la dénomination «K45» de 25 mm d'épaisseur imprégnées à cœur par un liant à base de silice et d'alumine ayant une densité de 96 kg/m³.

On entoure la face extérieure (11), destinée à venir au contact de la paroi froide, à l'aide d'une étoffe textile élastique, de manière à laisser totalement exsuder le liant et l'eau en excès. Après cinq minutes d'exsudation, on enlève la bande, on retire l'ensemble de la forme et on place la pièce dans un four pendant quatre heures à 150 °C, pour la sécher.

Enfin, on céramise des liants par traitement thermique pendant quatre heures à 1 350 °C.

La pièce isolante obtenue comporte:
- une première couche interne (1) formant face chaude, ayant une densité de l'ordre de 0,35, une épaisseur de 12 mm et résistant à des températures de 1 400 °C environ;
- une seconde couche (2), intermédiaire, moins dense (densité voisine de 0,25), ayant une épaisseur de 10 mm et qui résiste parfaitement à la température de 1 400 °C;
- une troisième couche (3), intermédiaire, encore moins dense que la couche (2) pour une épaisseur de 8 mm et qui résiste à des températures de 1 200 °C;
- et enfin, une quatrième couche (4) dont la face extérieure (11) constitue la face froide et qui présente une densité voisine de 0,15, une épaisseur de 20 mm, et qui résiste parfaitement à des températures de 1 150 °C.

Exemple 2:
On répète l'exemple précédent, mais en intercalant entre les nappes intermédiaires (3) et (4) une feuille (5) d'aluminium d'environ 20 µm d'épaisseur, badigeonnée de liant.

Après cuisson, on traite l'ensemble à des températures voisines de 1 150 °C. La feuille d'aluminium s'oxyde, sans se déchirer, en un film continu d'alumine, ce qui rend la pièce étanche.

Exemple 3:
On répète l'exemple 1. Après séchage à 150 °C, on chauffe la pièce pendant plusieurs heures à 1 350 °C sur la face chaude mais avec montée progressive en température.

On provoque ainsi le retrait initial des fibres de céramique, ce qui entraîne une excellente stabilité dimensionnelle de la pièce par la suite. Cette variante est utile lorsque les retraits exigés sont sensiblement nuls.

Exemple 4:
On répète l'exemple 1 en ajoutant sur la couche extérieure (4) une couche supplémentaire en fibres cellulosiques et en supprimant le traitement thermique de cuisson et de stabilisation. Après séchage à 110 °C, au lieu de 150 °C, cette couche supplémentaire se comporte comme un carton qui donne à l'ensemble une grande rigidité et facilite les manipulations.

Exemple 5:
On répète l'exemple 1 en remplaçant la couche extérieure (4) par un mélange de fibres cellulosiques et de fibres céramiques résistant à une température de 1 200 °C, les fibres cellulosiques représentant en poids 10% du poids de fibres céramiques.

Après séchage, puis cuisson à 1 350 °C, on obtient non seulement une excellente stabilité dimensionnelle, mais également une élimination des fibres cellulosiques qui sont brûlées. En brûlant, ces fibres provoquent l'apparition de vides, ce qui diminue la densité de cette couche (4) et permet de l'adapter si besoin est à sa fonction.

La technique selon l'invention présente de nombreux avantages par rapport aux techniques connues jusqu'à ce jour. On peut citer:
- la possibilité de réaliser des pièces isolantes de grande épaisseur, c'est-à-dire nettement supérieure à cent millimètres, qui est le maximum actuel que l'on puisse obtenir avec la technique d'aspiration sur forme perforée, même selon les enseignements du brevet FR-A-1 602 362 cité dans le préambule;
- la possibilité de réaliser rapidement des pièces sensiblement homogènes, chaque nappe adhérant fortement à ses voisines sur toute sa surface;
- la stabilité dimensionnelle des pièces isolantes réalisées, ce qui permet de respecter des cotes précises à froid, comme à chaud;
- la possibilité de réaliser des pièces étanches;
- la possibilité d'optimiser la densité apparente de chaque partie de la pièce pour une meilleure adaptation aux besoins;
- la possibilité d'un traitement de surface, par exemple pour limiter ou éliminer l'érosion dans le cas de vitesses de vent élevées, pour réduire l'effet des chocs mécaniques et en général chaque cas où un état de surface spécial est avantageux;
- la possibilité de fabriquer économiquement des pièces isolantes dont la densité peut atteindre 0,7, voire 0,9 (contre 0,3 selon l'art antérieur), ces fortes densités étant exigées par exemple dans l'industrie de l'aluminium et des métaux non ferreux;
- la possibilité de fabriquer des pièces alliant forte densité et grande résistance mécanique, ce que l'on ne savait faire jusqu'alors.

De la sorte, ces pièces peuvent être utilisées avec succès dans toutes les applications où l'on recherche non seulement une excellente isolation thermique à haute température, mais aussi et à la fois des propriétés physiques et/ou chimiques qui ont rendu jusqu'à ce jour le problème insoluble sur le plan technique. Ces pièces trouvent une application dans tous les domaines où l'emploi de températures supérieures à 800 °C est nécessaire. A titre indicatif, on peut citer: la pétrochimie, l'industrie nucléaire, l'industrie aéronautique ou aérospatiale, la fumisterie, la confection de fours de métallurgie.

**Revendications**

1. Pièce isolante, constituée par une succession de nappes superposées (1, 4) en fibres résistant à haute température, et dans laquelle:

    — la nappe intérieure constituant la face chaude (1) comporte pour partie essentielle des fibres ayant une haute résistance à la température;

    — la nappe extérieure constituant la face froide (4) comporte pour partie essentielle des fibres ayant une résistance à la température inférieure à celle des fibres de la nappe intérieure (1); caractérisé en ce que les nappes intermédiaires (2, 3) disposées entre ces deux nappes (1, 4), respectivement chaude (1) et froide (4):

    — d'une part, présentent une densité apparente qui diminue de la face chaude (1) à la face froide (4);

    — et d'autre part, comportent des fibres dont les propriétés de résistance à la température, sensiblement les mêmes à l'intérieur de chaque nappe, diminuent progressivement de la face chaude (1) à la face froide (4).

2. Pièce isolante selon la revendication 1, caractérisée en ce que les fibres résistant à haute température sont des fibres céramiques.

3. Pièce isolante selon la revendication 1, caractérisée en ce que entre deux nappes élémentaires successives (1, 4), on interpose une couche (5) étanche à haute température.

4. Procédé pour la fabrication d'une pièce isolante selon l'une des revendications 1 à 3, consistant:

    — tout d'abord, à empiler une succession de nappes élémentaires humides (1–4) en fibres résistant à haute température, imprégnées d'une composition liante, dans laquelle:

    — la nappe destinée à constituer la face chaude (1) comporte les fibres les plus résistantes à la température;

    — alors que la nappe destinée à constituer la face froide (4) comporte les fibres les moins résistantes à la température;

    — et la densité apparente de chaque nappe ainsi que ses propriétés de résistance à la température diminuent de la face chaude (1) à la face froide (4);

    — puis, à serrer l'ensemble dans une étoffe élastique pour permettre l'exsudation du liant en excès;

    — enfin, à sécher la pièce obtenue.

5. Procédé selon la revendication 4, caractérisé en ce que l'opération de serrage dans l'étoffe élastique est effectuée également après chaque dépôt de nappe humide.

6. Procédé selon l'une des revendications 4 et 5, caractérisé en ce que une au moins des nappes élémentaires (1–4) comporte également pour partie minoritaire des fibres combustibles, et en ce que l'ensemble exsudé est ensuite chauffé à une température supérieure à la température de combustion de ces fibres combustibles, de sorte que, les vides laissés par ces fibres qui ont brûlé, abaissent la densité de la couche ainsi réalisée.

7. Procédé selon l'une de revendications 4 à 6, caractérisé en ce que entre deux nappes élémentaires successives (1–4), on interpose une feuille d'aluminium (5), et en ce que l'on chauffe l'ensemble à une température suffisante pour provoquer l'oxydation de cette feuille d'aluminium (5).

8. Procédé selon l'une des revendication 4 à 7, caractérisé en ce successives (1–4), on interpose une nappe de fibres thermofusibles, et en ce que on chauffe l'ensemble à une température suffisante pour provoquer la fusion de ces fibres thermofusibles.

**Patentansprüche**

1. Isolierendes Stück, das aus einer Folge an übereinandergelegten Schichten (1, 4) aus hochtemperaturwiderstandsfähigen Fasern besteht, und bei dem

    — die innere Schicht, die die heisse Fläche (1) bildet, als wesentlichen Bestandteil Fasern mit einer hohen Temperaturwiderstandsfähigkeit aufweist,

    — die äussere Schicht, die die kalte Fläche (4) bildet, als wesentlichen Bestandteil Fasern mit einer geringeren Temperaturwiderstandsfähigkeit als die der Fasern der inneren Schicht aufweist, dadurch gekennzeichnet, dass die zwischenliegenden Schichten (2, 3), die zwischen den beiden Schichten (1, 4), also zwischen der heissen (1) bzw. der kalten (4), angeordnet sind,

    — einerseits eine Rohdichte aufweisen, die sich von der heissen Fläche (1) zur kalten Fläche (4) hin verringert, und

    — andererseits Fasern aufweisen, deren, im Innern jeder Schicht gleiche Temperaturwiderstandseigenschaften, sich schrittweise von der heissen Fläche (1) zur kalten Fläche (4) hin verringern.

2. Isolierendes Stück nach Anspruch 1, dadurch gekennzeichnet, dass die hochtemperaturwiderstandsfähigen Fasern keramische Fasern sind.

3. Isolierendes Stück nach Anspruch 1, dadurch gekennzeichnet, dass zwischen zwei aufeinanderfolgenden einzelnen Schichten (1, 4) eine hochtemperaturfeste Schicht (5) zwischengelegt ist.

4. Verfahren zum Herstellen eines isolierenden Stückes nach einem der Ansprüche 1 bis 3, bestehend aus

    — zunächst Aufeinanderlegen einer Folge an einzelnen feuchten Schichten (1–4) aus hochtemperaturwiderstandsfähigen Fasern, die mit einem Bindemittel getränkt sind, wobei

    — diejenige Schicht, die dazu bestimmt ist, die heisse Fläche (1) zu bilden, Fasern enthält, die die höchste Temperaturwiderstandsfähigkeit aufweisen,

    — wohingegen diejenige Schicht, die dazu bestimmt ist, die kalte Fläche (4) zu bilden, Fasern enthält, die die geringste Temperaturwiderstandsfähigkeit aufweisen,

    — und sich sowohl die Rohdichte als auch die Temperaturwiderstandseigenschaften jeder Schicht von der heissen Fläche (1) zur kalten Fläche (4) hin verringern;

    — anschliessend Zusammenpressen des Zusammenbaus in einem elastischen Gewebe, um ein Ausschwitzen des überschüssigen Bindemittels zu ermöglichen, und

– schliesslich Trocknen des so erhaltenen Stückes.

5. Verfahren nach Anspruch 4, dadurch gekennzeichnet, dass der Vorgang des Zusammenpressens im elastischen Gewebe gleichermassen nach jedem Auflegen einer feuchten Schicht durchgeführt wird.

6. Verfahren nach einem der Ansprüche 4 und 5, dadurch gekennzeichnet, dass zumindest eine der einzelnen Schichten (1–4) als Minderteil auch brennbare Fasern enthält, und dass der ausgeschitzte Zusammenbau anschliessend auf eine Temperatur erwärmt wird, die über der Verbrennungstemperatur der brennbaren Fasern liegt, so dass die Hohlräume, die aufgrund die Fasern, die verbrannt wurden, verbleiben, die Dichte der dadurch gebildeten Schicht absenken.

7. Verfahren nach einem der Ansprüche 4 bis 6, dadurch gekennzeichnet, dass zwischen zwei einzelnen aufeinanderfolgenden Schichten (1–4) eine Aluminiumfolie (5) zwischengelegt wird, und dass der Zusammenbau auf eine Temperatur erwärmt wird, die ausreichend ist, um eine Oxidation dieser Aluminiumfolie (5) hervorzurufen.

8. Verfahren nach einem der Ansprüche 4 bis 7, dadurch gekennzeichnet, dass zwischen zwei einzelnen aufeinanderfolgenden Schichten (1–4) eine Schicht an bei Wärme schmelzbaren Fasern zwischengelegt wird, und dass der Zusammenbau auf eine Temperatur erwärmt wird, die ausreicht, um das Schmelzen der bei Wärme schmelzbaren Fasern hervorzurufen.

**Claims**

1. Insulating piece, comprising a plurality of superposed layers (1, 4) of fibers, capable of withstanding high temperatures, and in which:

– the internal layer constituting the hot face (1) comprises for the most part of it fibers having a high resistance to temperature;

– the external layer constituting the cold face (4) comprises for the most part of it fibers less resistant to temperature than said fibers of the internal layer (1); wherein th intermediate layers (2, 3) located between the two layers (1, 4), respectively the hot face (1) and the cold face (4):

– on the one hand present a apparent density decreasing from the hot face (1) to the cold face (4);

– on the other hand comprise fibers of which the properties of resistance to temperature, roughly the same inside each layer, progressively decrease from the hot face (1) to the cold face (4).

2. Insulating piece according to claim 1, wherein the fibers having a high resistance to temperature are ceramic fibers.

3. Insulating piece according to claim 1, wherein a layer (5) impervious to fluid flow at high temperature comes between two successive elementary layers (1, 4).

4. Process for manufacturing an insulating piece according to one of the claims 1 to 3, consisting in:

– first, stacking a succession of wet elementary layers (1–4) made of fibers able to withstand high temperatures, impregnated with a binding composition, in which:

– the layer meant to constitute the hot face (1) contains fibers with the highest resistance to temperature;

– whereas the layer meant to constitute the cold face (4) contains the fibers with the lowest resistance to temperature;

– and the apparent density of each layer, and its properties of resistance to temperature decrease from the hot face (1) to the cold face (4),

– then, compressing the whole assembly in an elastic cloth to allow exuding of the excess of binder;

– finally, drying the resulting piece.

5. Process according to claim 4, wherein the operation of compressing in the elastic cloth is also realised after each laying of wet layer.

6. Process according to one of claims 4 and 5, wherein at least one of the elementary layers (1–4) also comprises a minor part of combustible fibers, and wherein the whole exuded assembly is then heated to a temperature higher than the combustion temperature of said combustible fibers, in order, by creating pores resulting from the fibers which have burnt, to reduce the density of the layer so realised.

7. Process according to one of claims 4 to 6, wherein a layer of aluminium (5) is interposed between two elementary layers (1–4), and wherein the assembly is heated at a sufficient temperature in order to induce the oxidation of this aluminium layer.

8. Process according to one of claims 4 to 7, wherein a layer of thermo-fusible fibers is interposed between two successive elementary layers (1–4), and wherein the assembly is heated at a sufficient temperature in order to induce the melting of these thermo-fusible fibers.

-11-

FIG.1

15
14
13
11
10
4 3 2 1

FIG.2

15
14
11
5
13
3
4
2
1
10

7